# EUROPÄISCHE PATENTSCHRIFT

(11) **EP 1 215 811 B1**
(45) Veröffentlichungstag und Bekanntmachung des Hinweises auf die Patenterteilung: **08.04.2009**
(21) Anmeldenummer: 01122084.5
(22) Anmeldetag: 14.09.2001
(51) Int. Cl.: H02P 8/34, H02P 8/36

(54) **Verfahren und Vorrichtung zur Überwachung von Schrittmotoren**
Method and device for monitoring stepper motors
Méthode et dispositif pour surveiller des moteurs pas-à-pas

(30) Priorität: 12.12.2000 DE 10061787
(43) Veröffentlichungstag der Anmeldung: 19.06.2002
(73) Patentinhaber: Siemens Schweiz AG, 8047 Zürich (CH)
(72) Erfinder: Mair, Franz, 76571 Gaggenau (DE)
(74) Vertreter: Weise, Wolfgang

(56) Entgegenhaltungen:
- EP-A- 0 182 774
- EP-A- 0 402 220
- DE-A1- 19 723 933
- US-A- 5 739 661

## Beschreibung

Die Erfindung betrifft eine Vorrichtung zur Überwachung eines Schrittmotors nach dem Oberbegriff des Patentanspruches 1 sowie ein Verfahren zur Überwachung eines Schrittmotors nach dem Oberbegriff des Patentanspruches 9, insbesondere ein Verfahren bzw. eine Vorrichtung zur Überwachung von unipolaren Schrittmotoren.

Aus der DE 40 35 970 A1 ist eine Vorrichtung zur Bewegungserkennung eines mehrphasigen, unipolaren Schrittmotors bekannt, wobei die an einer oder mehreren Phasen des Schrittmotors anliegenden Spannung überwacht wird. Die Spannungsverläufe mindestens zweier aufeinanderfolgender Phasenstränge des Schrittmotors werden über eine Meßschaltung in kleinen Schritten abgetastet, digitalisiert und von einem Regler ausgewertet.

Aus der EP 0 305 876 A2 ist ein Verfahren zur Bewegungserkennung eines Schrittmotors bekannt, wonach der Motorstrom des Schrittmotors differenziert wird. Falls der differenzierte Motorstrom nach einem ausgeführten Schritt innerhalb eines bestimmten Zeitintervalls unter ein bestimmtes Niveau fällt, so kann auf die ordnungsgemäße Ausführung des Schrittbefehls geschlossen werden.

EP-A-0402220 offenbart ein Verfahren bzw. eine Vorrichtung zur Überwachung eines Schrittmotors, mit einer Ansteuerschaltung die über Ansteuersignale den Schrittmotor ansteuert und mit einem Regler, der Steuersignale für die Ansteuerschaltung erzeugt, wobei eine Rückmeldeschaltung den vom Schrittmotor aufgenommenen Strom erfasst, und der Regler von der Rückmeldeschaltung abgegebene Rückmeldesignale auswertet.

Diese bekannten Vorrichtungen und Verfahren zur Überwachung von Schrittmotoren dienen der Bewegungserkennung und detektieren, ob der Schrittmotor den angesteuerten Schrittbefehl ausgeführt hat. In vielen Anwendungsfällen ist eine solche Bewegungserkennung des Schrittmotors jedoch aufgrund anderweitig bereits vorhandener Sensoren überflüssig. Eine Funktionsstörung oder eine Blockierung des Schrittmotors wird beim Stand der Technik durch eine aufwendige Positionserkennung bzw. durch eine entsprechende Positionsrückmeldung detektiert.

Bei der Überwachung der am Schrittmotor anliegenden Spannung bzw. bei der Differenzierung der vom Schrittmotor aufgenommenen Ströme kann es jedoch zu Fehlmeldungen kommen. Störspitzen bei der Spannungsüberwachung, Welligkeiten in der Versorgungsspannung oder auch komplizierte und störanfällige Schaltungen zur Differenzierung von durch den Schrittmotor aufgenommenen Strömen bedingen kostspielige und aufwendige Überwachungsschaltungen, die selbst eine inhärente Störanfälligkeit aufweisen.

Der Erfindung liegt daher die Aufgabe zugrunde, ein Verfahren bzw. eine Vorrichtung zur Überwachung von Schrittmotoren anzugeben, die kostengünstig herstellbar bzw. durchführbar ist, gegenüber großen Schwankungen der Versorgungsspannung unempfindlich ist und selbst nur eine minimale Störanfälligkeit aufgrund einfacher Bauweise aufweist.

Die Erfindung löst diese Aufgabe durch die kennzeichnenden Merkmale der unabhängigen Patentansprüche 1 und 9. Vorteilhafte Ausführungsformen der Erfindung sind in den entsprechenden Unteransprüchen gekennzeichnet und beansprucht.

Die erfindungsgemäße Vorrichtung bzw. das erfindungsgemäße Verfahren verzichtet auf eine aufwendige Positionserkennung des Schrittmotors bzw. auf eine aufwendige Analyse des vom Schrittmotor aufgenommenen Stroms bzw. der am Schrittmotor anliegenden Spannung. Gemäß der erfindungsgemäßen Vorrichtung zur Überwachung von Schrittmotoren wird ein Schrittmotor über Ansteuersignale einer Ansteuerschaltung angesteuert. Ein Regler, beispielsweise ein Mikrocontroller, erzeugt die Steuersignale für die Ansteuerschaltung; um die einzelnen Phasen bzw. Wicklungen des Schrittmotors entsprechend anzusteuern. Eine Rückmeldeschaltung erfaßt den vom Schrittmotor aufgenommenen Strom. Die von der Rückmeldeschaltung abgegebenen Rückmeldesignale werden dann vom Regler ausgewertet, um festzustellen, ob ein Strom fließt oder nicht, das heißt, ob der Schrittmotor den Befehl ausgeführt hat bzw. den Befehl ausführen konnte oder nicht.

Die erfindungsgemäße Vorrichtung vergleicht anhand der Rückmeldeschaltung den vom Schrittmotor aufgenommenen Strom mit mindestens einem einstellbaren Grenzwert und erzeugt mindestens ein Rückmeldesignal, welches angibt, ob der vom Schrittmotor aufgenommene Strom über oder unter dem mindestens einen einstellbaren Grenzwert liegt.

Mit Vorteil ist der Schrittmotor dabei ein unipolarer Schrittmotor. Bei unipolaren Schrittmotoren sind die Mittelanzapfungen der beiden Wicklungen nach außen geführt. Jede Mittelanzapfung wird an einen Pol der Versorgungsspannung gelegt, während eines der beiden Enden der entsprechenden Wicklung des Schrittmotors über die Ansteuerschaltung an den entgegengesetzten Pol der Versorgungsspannung gelegt wird. Der Stromfluß in den einzelnen Wicklungsteilen hat dabei immer die gleiche Richtung.

Die Rückmeldeschaltung der erfindungsgemäßen Vorrichtung erfaßt den von der oder den Motorwicklungen aufgenommenen Strom und vergleicht diesen mit mindestens einem einstellbaren Grenzwert. Liegt der vom Schrittmotor aufgenommene Strom unter dem einstellbaren Grenzwert, so kann auf eine elektrische Unterbrechung geschlossen werden. Die erfindungsgemäße Rückmeldeschaltung kann mit Vorteil in zwei verschiedenen Varianten ausgeführt werden:

Nach einer ersten Variante vergleicht die Rückmeldeschaltung die von beiden Wicklungen des Schrittmotors aufgenommenen Ströme mit einstellbaren Grenzwerten und erzeugt ein Rückmeldesignal, das angibt, ob der von einer der beiden Wicklungen oder von beiden Wicklungen des Schrittmotors aufgenommene Strom unter den einstellbaren Grenzwerten liegt, oder ob der von beiden Wicklungen des Schrittmotors aufgenommene Strom über den einstellbaren Grenzwerten liegt. Es existiert somit genau ein Rückmeldesignal. Wenn dieses Rückmeldesignal angibt, daß die aufgenommenen Ströme über den einstellbaren Grenzwerten liegen, so kann daraus geschlossen werden, daß beide Wicklungen des Schrittmotors einen über den einstellbaren Grenzwerten liegenden Strom aufnehmen. Andernfalls nimmt mindestens eine von beiden Wicklungen einen unter den einstellbaren Grenzwerten liegenden Strom auf. Der jeweilige einstellbare Grenzwert kann dabei für jede Wicklung des Schrittmotors separat durch entsprechende Dimensionierung von bsp. Widerständen festgelegt werden, wobei die Widerstände jeweils zwischen den Mittelanzapfungen der Wicklungen und der Versorgungsspannung liegen.

Nach einer zweiten vorteilhaften Variante der Erfindung vergleicht die Rückmeldeschaltung den von jeder einzelnen Wicklung des Schrittmotors aufgenommenen Strom mit jeweils einem der entsprechenden Wicklung zugeordneten einstellbaren Grenzwert und erzeugt zwei unabhängige Rückmeldesignale, die jeweils angeben, ob der von der entsprechenden Wicklung des Schrittmotors aufgenommene Strom über oder unter dem der Wicklung zugeordneten einstellbaren Grenzwert liegt. Die entsprechenden Rückmeldesignale geben somit Auskunft über den Stromfluß in jeder einzelnen Wicklung des Schrittmotors.

Mit Vorteil weist die Rückmeldeschaltung mindestens einen Spannungsteiler zur Einstellung des Grenzwertes und mindestens einen Transistor zur Erzeugung des Rückmeldesignals auf, wobei der von den Wicklungen des unipolaren Schrittmotors aufgenommene Strom über deren Mittelanzapfungen gemessen wird. Der bzw. die Spannungsteiler werden durch einstellbare bzw. dimensionierbare Widerstände, die zwischen je einer Wicklung (Mittelanzapfung) des Schrittmotors und der Versorgungsspannung liegen, und der entsprechenden Wicklung selbst realisiert.

Der Regler der erfindungsgemäßen Vorrichtung vergleicht die oder das Rückmeldesignal mit den Steuersignalen und kann dadurch Funktionsstörungen des Schrittmotors, der Ansteuerschaltung, der Rückmeldeschaltung oder der elektrischen Verbindungsleitungen detektieren. Eine Funktionsstörung des Schrittmotors, der Ansteuerschaltung oder der elektrischen Verbindungsleitungen kann dadurch detektiert werden, daß der Regler Steuersignale zur Bestromung einer oder beider Wicklungen des Schrittmotors abgibt und diese Steuersignale mit dem oder den Rückmeldesignalen vergleicht, die angeben, daß die Stromaufnahme mindestens einer oder beider Wicklungen unter dem entsprechend einstellbaren Grenzwert liegt.

Der beispielsweise als Mikrocomputer ausgeführte Regler kennt sowohl die abgegebenen Steuersignale als auch die entsprechenden Rückmeldesignale der Rückmeldeschaltung. Nach der ersten vorteilhaften Variante der erfindungsgemäßen Vorrichtung wird beispielsweise dann eine elektrische Unterbrechung erkannt, wenn gemäß den Steuersignalen beide Wicklungen des Schrittmotors bestromt sein müßten, das Rückmeldesignal jedoch angibt, daß die Stromaufnahme von mindestens einer Wicklung unter dem einstellbaren Grenzwert liegt. Nach der zweiten vorteilhaften Variante der vorliegenden Erfindung wird eine elektrische Unterbrechung dann erkannt, wenn das entsprechende Rückmeldesignal mit dem entsprechenden Steuersignal einer Wicklung des Schrittmotors nicht zusammenpaßt. Beispielsweise ist eine Wicklung des Schrittmotors laut Steuersignal bestromt, während das Rückmeldesignal dieser Wicklung angibt, daß die Stromaufnahme der Wicklung unter dem der Wicklung zugeordneten einstellbaren Grenzwerts liegt.

Der Regler kann jedoch auch eine Funktionsstörung der Rückmeldeschaltung selbst detektieren. Wenn der Regler keine Steuersignale zur Bestromung des Schrittmotors abgibt und die oder das Rückmeldesignal angeben, daß die Stromaufnahme des Schrittmotors über dem entsprechend einstellbaren Grenzwert liegt, so ist die Rückmeldeschaltung defekt.

Das erfindungsgemäße Verfahren zur Überwachung eines Schrittmotors, der mittels Ansteuersignalen einer Ansteuerschaltung angesteuert wird, erzeugt mittels des Reglers Steuersignale für die Ansteuerschaltung. Der vom Schrittmotor aufgenommene Strom wird erfaßt und über Rückmeldesignale einer Rückmeldeschaltung durch den Regler ausgewertet.

Der von beiden Wicklungen eines unipolaren Schrittmotors aufgenommene Strom wird mit einem einstellbaren Grenzwert verglichen und ein entsprechenden Rückmeldesignal wird erzeugt, welches angibt, ob der von einer der beiden Wicklungen oder von beiden Wicklungen des Schrittmotors aufgenommene Strom unter dem einstellbaren Grenzwert liegt, oder ob der von beiden Wicklungen des Schrittmotors aufgenommene Strom über dem einstellbaren Grenzwert liegt.

Auch kann das erfindungsgemäße Verfahren den von jeder Wicklung eines unipolaren Schrittmotors aufgenommenen Strom mit jeweils einem der entsprechenden Wicklung zugeordneten einstellbaren Grenzwert vergleichen und zwei Rückmeldesignale erzeugen, die jeweils angeben, ob der von der entsprechenden Wicklung des Schrittmotors aufgenommene Strom über oder unter dem der Wicklung zugeordneten einstellbaren Grenzwert liegt.

Mit Hilfe des erfindungsgemäßen Verfahrens kann somit eine elektrische Unterbrechung in der Ansteuerschaltung, des Schrittmotors, in der Zuleitung zum Schrittmotor, das heißt in den elektrischen Verbindungsleitungen, oder auch in der Motorwicklung des Schrittmotors selbst detektiert bzw. erkannt werden. Diese Erkennung einer elektrischen Unterbrechung dient zur Feststellung, daß der Schrittmotor nicht mehr positionieren kann, oder zumindest nicht mehr fehlerfrei positioniert. Ohne diese Erkennung würde eine elektrische Unterbrechung erst dadurch erkannt, daß die Stellgröße für die Ansteuerung des Schrittmotors durch den Regler an den Anschlag getrieben wird.

Eine bevorzugte Ausführungsform der vorliegenden Erfindung wird anhand der Zeichnungen näher beschrieben.

Dabei zeigen:
- Figur 1: ein Blockschaltbild der erfindungsgemäßen Vorrichtung bzw. des erfindungsgemäßen Verfahrens, und
- Figur 2: ein elektrisches Schaltbild einer ersten Variante der erfindungsgemäßen Vorrichtung bzw. des erfindungsgemäßen Verfahrens.

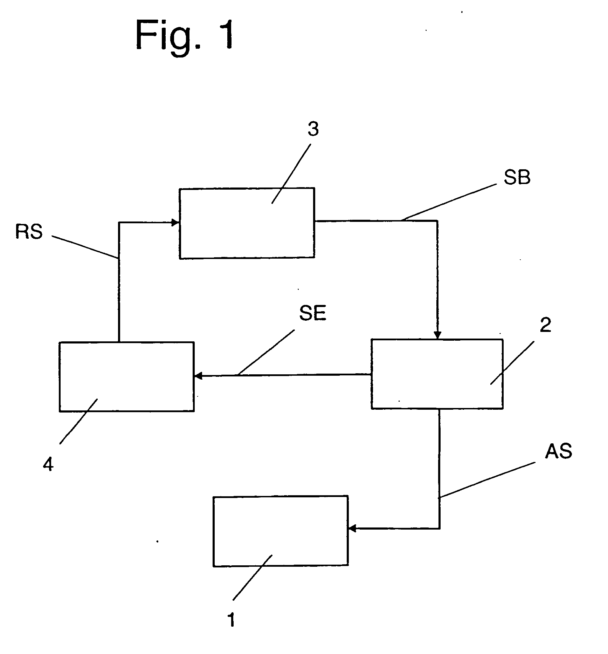

Figur 1 zeigt ein Blockschaltbild der erfindungsgemäßen Vorrichtung bzw. des erfindungsgemäßen Verfahrens mit einem Regler 3, der mittels Steuersignalen SB eine Ansteuerschaltung 2 ansteuert. Die Ansteuerschaltung 2 steuert mittels Ansteuersignalen AS einen Schrittmotor 1. Die Stromaufnahme des Schrittmotors 1 bzw. der Wicklungen des Schrittmotors 1 wird einer Rückmeldeschaltung 4 mittels eines Stromsignals SE übermittelt. Die Rückmeldeschaltung 4 erzeugt ein Rückmeldesignal RS, welches an den Regler 3 rückgemeldet wird. Das Stromsignal SE ist in Figur 1 zwischen der Ansteuerschaltung 2 und der Rückmeldeschaltung 4 eingezeichnet. Das Stromsignal SE wird beispielsweise über die Mittelanzapfungen der Wicklungen eines unipolaren Schrittmotors 1 gemessen.

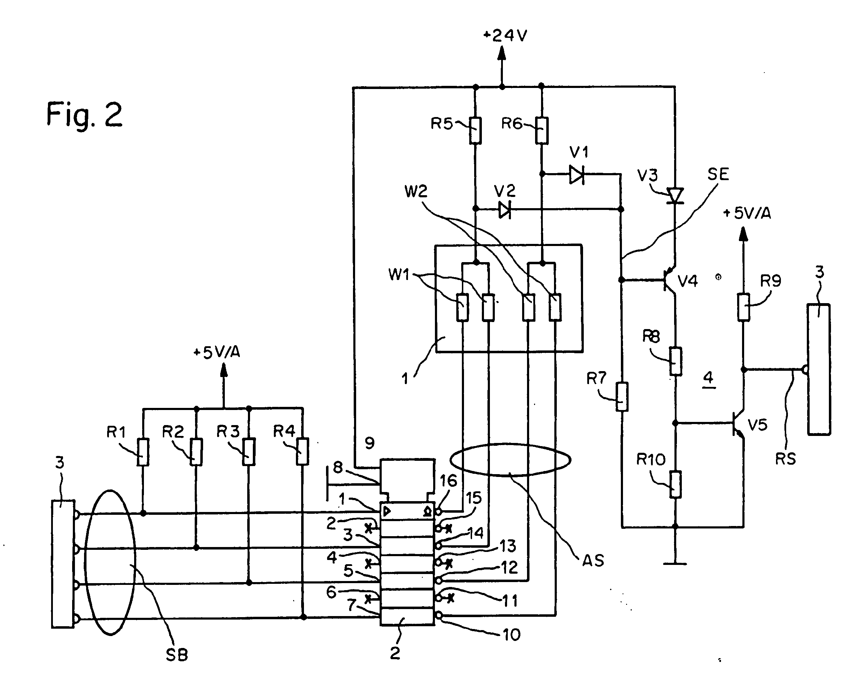

Figur 2 zeigt ein elektrisches Schaltbild einer ersten vorteilhaften Variante der erfindungsgemäßen Vorrichtung bzw. des erfindungsgemäßen Verfahrens. Der Regler 3 steuert über Steuersignale SB die Ansteuerschaltung 2, die beispielsweise als integrierte Schaltung ausgeführt ist. Die Steuersignale SB des Reglers 3 werden mittels einer Steuerspannung (z.B. +5 V) über Widerstände R1 bis R4 an die Eingänge der Ansteuerschaltung 2 gelegt. Die Ausgänge der Ansteuerschaltung 2 erzeugen die Ansteuersignale AS zur Ansteuerung des Schrittmotors 1. Der unipolare Schrittmotor 1 hat zwei Wicklungen W1 und W2, deren Mittelanzapfungen über zwei Widerstände R5 und R6 an die Versorgungsspannung (z.B. 24 V) gelegt sind. Eines der beiden Enden der jeweiligen Wicklung W1 bzw. W2 des Schrittmotors 1 wird über die Ansteuerschaltung 2 an den entgegengesetzten Pol der Versorgungsspannung gelegt.

Falls der über beide Wicklungen W1 und W2 fließende Strom über einem einstellbaren Grenzwert liegt, so wird ein Rückmeldesignal RS erzeugt, wenn die durch den Widerstand R10 bestimmte Basisspannung eines Transistors V5 den Transistor V5 durchschaltet und dadurch eine an einem Widerstand R9 abfallende Spannung durch den Regler 3 erkannt wird.

Der vom Schrittmotor 1 aufgenommene Strom wird, für jede Wicklung W1 und W2 getrennt, über einen Serienwiderstand R5 bzw. R6 geführt. Fließt ein entsprechender Strom durch die jeweilige Wicklung W1 oder W2 des Schrittmotors 1 und den entsprechenden vorgeschalteten Serienwiderstand R5 bzw. R6, so verteilt sich die angelegte Versorgungsspannung (+24V) gemäß einem Spannungsteiler auf den Serienwiderstand und die entsprechende Motorwicklung. Mit Vorteil werden die Serienwiderstände R5 bzw. R6 derart dimensioniert, daß auch bei minimaler Versorgungsspannung für den Schrittmotor 1 noch eine Spannung von mindestens 0,7 Volt abfällt. Dieser Wert ist erforderlich, um den nachgeschalteten Transistor V4 durchzusteuern.

Bei bekannter Impedanz (Widerstand) der jeweiligen Motorwicklung W1 bzw. W2 kann der entsprechende Serienwiderstand R5 bzw. R6 so gewählt werden, daß bei ordnungsgemäßer (fehlerfreier) Bestromung des Motors am jeweiligen Serienwiderstand eine Spannung von mindestens 0,7 Volt abfällt.

Nach der ersten Variante der vorliegenden Erfindung werden die Spannungsabfälle an beiden Serienwiderständen R5 und R6 über die zwei Dioden V1 und V2 logisch "UND"-verknüpft, das heißt nur wenn an beiden Widerständen R5 und R6 die geforderte Spannung abfällt, schaltet auch der nachfolgende Transistor V4 durch. Die dritte Diode V3 dient dazu, die an den beiden ersten Dioden V1 und V2 der "UND"-Verknüpfung abfallenden Spannung wieder zu kompensieren. Der so angesteuerte Transistor V4 wirkt auf den nachfolgenden Spannungsteiler, der wiederum den vorgenannten zweiten Transistor V5 ansteuert. Diese Maßnahme ist mit Vorteil anzuwenden, um das 24-Volt-Potential der Schrittmotorversorgung auf das 5-Volt-Potential des Mikrocontrollers zu reduzieren.

Bei der zweiten vorteilhaften Variante der vorliegenden Erfindung (in Figur 2 nicht gezeigt) werden die entsprechenden Spannungsabfälle an den Serienwiderständen R5 und R6 jeweils einzeln dem Mikrocontroller zugeführt. Dazu ist lediglich für beide Signale die entsprechende auch in Figur 2 gezeigte Umsetzung auf das 5-Volt-Potential erforderlich. Auf die in der Figur 2 gezeigten Dioden V1, V2 und V3 kann hier verzichtet werden. Dafür werden bei dieser Variante insgesamt drei Transistoren benötigt.

Nach der zweiten vorteilhaften Ausführungsform der vorliegenden Erfindung kann jede Wicklung des Schrittmotors 1 getrennt "gelesen" werden, das heißt diese Variante liefert für jede Wicklung W1 bzw. W2 getrennt die Information, ob der aufgenommene Strom über dem entsprechenden Grenzwert liegt oder nicht. Dadurch gewinnt man eine höhere Verfügbarkeit des Rückmeldesignals (die Rückmeldung gilt auch dann, wenn gerade beide Wicklungen W1 und W2 angesteuert werden) und eine einfachere Zuordnung des Ansteuersignals zu dem "geforderten" Rückmeldesignal.

Es ergibt sich somit eine mit wenigen Bauelementen realisierbare Rückmeldeschaltung 4, die gegenüber Schwankungen der Versorgungsspannung unempfindlich ist und die für unterschiedliche Größen, das heißt unterschiedliche Leistungen von Schrittmotoren, eingesetzt werden kann.

## Patentansprüche

1. Vorrichtung zur Überwachung eines Schrittmotors (1), mit einer Ansteuerschaltung (CC, CP) die über Ansteuersignale (AS) den Schrittmotor (1)ansteuert und mit einem Regler (3) der Steuersignale (SB) für die Ansteuerschaltung (2) erzeugt, wobei eine Rückmeldeschaltung (4) den vom Schrittmotor (1) aufgenommenen Strom erfasst, und dass der Regler (3) von der Rückmeldeschaltung (4) abgegebene Rückmeldesignale (RS) auswertet, **dadurch gekennzeichnet, dass** der Regler (3) die Rückmeldesignale (RS) mit den Steuersignalen (SB) vergleicht und **dadurch** Funktionsstörungen des Schrittmotors (1), der Ansteuerschaltung (2), der Rückmeldeschaltung (4) und der elektrischen Verbindungsleitungen detektierbar sind.

2. Vorrichtung nach Anspruch 1, **dadurch gekennzeichnet, dass** die Rückmeldeschaltung (4) den vom Schrittmotor (1) aufgenommenen Strom mit mindestens einem einstellbaren Grenzwert vergleicht und mindestens ein Rückmeldesignal (RS) erzeugt, das angibt, ob der vom Schrittmotor (1) aufgenommene Strom über oder unter dem mindestens einen einstellbaren Grenzwert liegt.

3. Vorrichtung nach einem der Ansprüche 1 oder 2, **dadurch gekennzeichnet, dass** der Schrittmotor (1) ein unipolarer Schrittmotor ist.

4. Vorrichtung nach einem der Ansprüche 1 bis 3, **dadurch gekennzeichnet, dass** die Rückmeldeschaltung (4) den von beiden Wicklungen (W1, W2) des Schrittmotors (1) aufgenommenen Strom mit einem einstellbaren Grenzwert vergleicht und ein Rückmeldesignal (RS) erzeugt, das angibt, ob der von einer der beiden Wicklungen (W1, W2) oder von beiden Wicklungen (W1, W2) des Schrittmotors (1) aufgenommene Strom unter dem einstellbaren Grenzwert liegt oder ob der von beiden Wicklungen (W1, W2) des Schrittmotors (1) aufgenommene Strom über dem einstellbaren Grenzwert liegt.

5. Vorrichtung nach einem der Ansprüche 1 bis 3, **dadurch gekennzeichnet, dass** die Rückmeldeschaltung (4) den von jeder Wicklung (W1, W2) des Schrittmotors (1) aufgenommenen Strom mit jeweils einem der Wicklung (W1, W2) zugeordneten einstellbaren Grenzwert vergleicht und zwei Rückmeldesignale (RS) erzeugt, die jeweils angeben, ob der von der entsprechenden Wicklung (W1, W2) des Schrittmotors (1) aufgenommene Strom über oder unter dem der Wicklung (W1, W2) zugeordneten einstellbaren Grenzwert liegt.

6. Vorrichtung nach einem der vorhergehenden Ansprüche, **dadurch gekennzeichnet, dass** die Rückmeldeschaltung (4) mindestens einen Spannungsteiler (W1, R5; W2, R6) zur Einstellung der Grenzwerte und mindestens einen Transistor (V5) zur Erzeugung des Rückmeldesignals (RS) aufweist, wobei der von den Wicklungen (W1, W2) des unipolaren Schrittmotors (1) aufgenommene Strom über deren Mittelanzapfungen gemessen wird.

7. Vorrichtung nach einem der vorhergehenden Ansprüche, **dadurch gekennzeichnet, dass** der Regler (3) eine Funktionsstörung des Schrittmotors (1), der Ansteuerschaltung (2) oder der elektrischen Verbindungsleitungen detektiert, wenn der Regler (3) Steuersignale (SB) zur Bestromung einer oder beider Wicklungen (W1, W2) des Schrittmotors (1) abgibt und die oder das Rückmeldesignal (RS) angeben, dass die Stromaufnahme einer oder beider Wicklungen (W1, W2) unter dem entsprechend einstellbaren Grenzwert liegt.

8. Vorrichtung nach Anspruch 7, **dadurch gekennzeichnet, dass** der Regler (3) eine Funktionsstörung der Rückmeldeschaltung (4) detektiert, wenn der Regler (3) keine Steuersignale (SB) zur Bestromung des Schrittmotors (1) abgibt und die oder das Rückmeldesignal (RS) angeben, dass die Stromaufnahme des Schrittmotors (1) über dem entsprechend einstellbaren Grenzwert liegt.

9. Verfahren zur Überwachung eines Schrittmotors, der mittels Ansteuersignalen (AS) einer Ansteuerschaltung (2) angesteuert wird, wobei die Steuersignale (SB) für die Ansteuerschaltung (2) von einem Regler (3) erzeugt werden, wobei der vom Schrittmotor (1) aufgenommene Strom erfasst und über Rückmeldsignale (RS) einer Rückmeldeschaltung (4) durch den Regler (3) ausgewertet wird, **dadurch gekennzeichnet, dass** der Regler (3) das Rückmeldesignal (RS) mit den Steuersignalen (SB) vergleicht und **dadurch** Funktionsstörungen des Schrittmotors (1), der Ansteuerschaltung (2), der Rückmeldeschaltung (4) und der elektrischen Verbindungsleitungen detektierbar sind.

10. Verfahren nach Anspruch 9, **dadurch gekennzeichnet, dass** der von beiden Wicklungen (W1, W2) eines unipolaren Schrittmotors (1) aufgenommene Strom mit einem einstellbaren Grenzwert verglichen und ein entsprechendes Rückmeldesignal (RS) erzeugt wird, das angibt, ob der von einer der beiden Wicklungen (W1, W2) oder von beiden Wicklungen (W1, W2) des Schrittmotors (1) aufgenommene Strom unter dem einstellbaren Grenzwert liegt oder ob der von beiden Wicklungen (W1, W2) des Schrittmotors (1) aufgenommene Strom über dem einstellbaren Grenzwert liegt.

11. Verfahren nach Anspruch 9, **dadurch gekennzeichnet, dass** der von jeder Wicklung (W1, W2) eines unipolaren Schrittmotors (1) aufgenommene Strom mit jeweils einem der Wicklung (W1, W2) zugeordneten einstellbaren Grenzwert verglichen und zwei Rückmeldesignale (RS) erzeugt werden, die jeweils angeben, ob der von der entsprechenden Wicklung (W1, W2) des Schrittmotors (1) aufgenommene Strom über oder unter dem der Wicklung (W1, W2) zugeordneten einstellbaren Grenzwert liegt.

12. Verfahren nach einem der Ansprüche 9 - 11, **dadurch gekennzeichnet, dass** eine Funktionsstörung des Schrittmotors (1), der Ansteuerschaltung (2) oder der elektrischen Verbindungsleitungen detektiert wird, wenn die Steuersignale (SB) eine Bestromung einer oder beider Wicklungen (W1, W2) des Schrittmotors (1) signalisieren und die oder das Rückmeldesignal (RS) angeben, dass die Stromaufnahme einer oder beider Wicklungen (W1, W2) unter dem entsprechend einstellbaren Grenzwert liegt.

13. Verfahren nach einem der Ansprüche 9 - 11, **dadurch gekennzeichnet, dass** eine Funktionsstörung der Rückmeldeschaltung (4) detektiert wird, wenn die Steuersignale (SB) keine Bestromung des Schrittmotors (1) signalisieren und die oder das Rückmeldesignal (RS) angeben, dass die Stromaufnahme des Schrittmotors (1) über dem entsprechend einstellbaren Grenzwert liegt.

## Claims

1. Device for monitoring a stepper motor (1), with a drive circuit (CC, CP), which drives the stepper motor (1) via drive signals (AS), and with a controller (3), which generates control signals (SB) for the drive circuit (2), a feedback circuit (4) detecting the current consumed by the stepper motor (1), and the controller (3) evaluating feedback signals (RS) output by the feedback circuit (4), **characterized in that** the controller (3) compares the feedback signals (RS) with the control signals (SB) and, as a result, operational faults of the stepper motor (1), the drive circuit (2), the feedback circuit (4) and the electrical connecting lines can be detected.

2. Device according to Claim 1, **characterized in that** the feedback circuit (4) compares the current consumed by the stepper motor (1) with at least one adjustable limit value and generates at least one feedback signal (RS) which indicates whether the current consumed by the stepper motor (1) is above or below the at least one adjustable limit value.

3. Device according to either of Claims 1 and 2, **characterized in that** the stepper motor (1) is a unipolar stepper motor.

4. Device according to one of Claims 1 to 3, **characterized in that** the feedback circuit (4) compares the current consumed by both windings (W1, W2) of the stepper motor (1) with an adjustable limit value and generates a feedback signal (RS) which indicates whether the current consumed by one of the two windings (W1, W2) or by both windings (W1, W2) of the stepper motor (1) is below the adjustable limit value or whether the current consumed by both windings (W1, W2) of the stepper motor (1) is above the adjustable limit value.

5. Device according to one of Claims 1 to 3, **characterized in that** the feedback circuit (4) compares the current consumed by each winding (W1, W2) of the stepper motor (1) with in each case one adjustable limit value associated with the winding (W1, W2) and generates two feedback signals (RS) which each indicate whether the current consumed by the corresponding winding (W1, W2) of the stepper motor (1) is above or below the adjustable limit value associated with the winding (W1, W2).

6. Device according to one of the preceding claims, **characterized in that** the feedback circuit (4) has at least one voltage divider (W1, R5; W2, R6) for adjusting the limit values and at least one transistor (V5) for generating the feedback signal (RS), the current consumed by the windings (W1, W2) of the unipolar stepper motor (1) being measured via the centre taps of said windings.

7. Device according to one of the preceding claims, **characterized in that** the controller (3) detects an operational fault of the stepper motor (1), the drive circuit (2) or the electrical connecting lines if the controller (3) outputs control signals (SB) for energizing one or both windings (W1, W2) of the stepper motor (1) and the feedback signal(s) (RS) indicate(s) that the current consumption of one or both windings (W1, W2) is below the correspondingly adjustable limit value.

8. Device according to Claim 7, **characterized in that** the controller (3) detects an operational fault of the feedback circuit (4) if the controller (3) does not output any control signals (SB) for energizing the stepper motor (1) and the feedback signal(s) (RS) indicate(s) that the current consumption of the stepper motor (1) is above the correspondingly adjustable limit value.

9. Method for monitoring a stepper motor which is driven by means of drive signals (AS) of a drive circuit (2), the control signals (SB) for the drive circuit (2) being generated by a controller (3), the current consumed by the stepper motor (1) being detected and being evaluated via feedback signals (RS) of a feedback circuit (4) by the controller (3), **characterized in that** the controller (3) compares the feedback signal (RS) with the control signals (SB) and, as a result, operational faults of the stepper motor (1), the drive circuit (2), the feedback circuit (4) and the electrical connecting lines can be detected.

10. Method according to Claim 9, **characterized in that** the current consumed by both windings (W1, W2) of a unipolar stepper motor (1) is compared with an adjustable limit value and a corresponding feedback signal (RS) is generated which indicates whether the current consumed by one of the two windings (W1, W2) or by both windings (W1, W2) of the stepper motor (1) is below the adjustable limit value or whether the current consumed by both windings (W1, W2) of the stepper motor (1) is above the adjustable limit value.

11. Method according to Claim 9, **characterized in that** the current consumed by each winding (W1, W2) of a unipolar stepper motor (1) is compared with in each case one adjustable limit value associated with the winding (W1, W2) and two feedback signals (RS) are generated which each indicate whether the current consumed by the corresponding winding (W1, W2) of the stepper motor (1) is above or below the adjustable limit value associated with the winding (W1, W2).

12. Method according to one of Claims 9-11, **characterized in that** an operational fault of the stepper motor (1), the drive circuit (2) or the electrical connecting lines is detected if the control signals (SB) signal energization of one or both windings (W1, W2) of the stepper motor (1) and the feedback signal(s) (RS) indicate(s) that the current consumption of one or both windings (W1, W2) is below the correspondingly adjustable limit value.

13. Method according to one of Claims 9-11, **characterized in that** an operational fault of the feedback circuit (4) is detected if the control signals (SB) signal no energization of the stepper motor (1) and the feedback signal(s) (RS) indicate(s) that the current consumption of the stepper motor (1) is above the correspondingly adjustable limit value.

## Revendications

1. Dispositif pour surveiller un moteur pas à pas (1), comprenant un circuit de pilotage (CC, CP) qui pilote le moteur pas à pas (1) via des signaux de pilotage (AS), et un régulateur (3) qui produit des signaux de commande (SB) pour le circuit de pilotage (2), où un circuit de réponse (4) détecte le courant absorbé par le moteur pas à pas (1) et où le régulateur (3) évalue des signaux de réponse (RS) délivrés par le circuit de réponse (4), **caractérisé en ce que** le régulateur (3) compare les signaux de réponse (RS) avec les signaux de commande (SB), permettant ainsi de détecter des dysfonctionnements du moteur pas à pas (1), du circuit de pilotage (2), du circuit de réponse (4) et des connexions électriques.

2. Dispositif selon la revendication 1, **caractérisé en ce que** le circuit de réponse (4) compare le courant absorbé par le moteur pas à pas (1) avec au moins une valeur limite réglable et produit au moins un signal de réponse (RS), lequel indique si le courant absorbé par le moteur pas à pas (1) est supérieur ou inférieur à ladite au moins une valeur limite réglable.

3. Dispositif selon l'une des revendications 1 ou 2, **caractérisé en ce que** le moteur pas à pas (1) est un moteur pas à pas unipolaire.

4. Dispositif selon l'une des revendications 1 à 3, **caractérisé en ce que** le circuit de réponse (4) compare le courant absorbé par les deux enroulements (W1, W2) du moteur pas à pas (1) avec une valeur limite réglable et produit un signal de réponse (RS), lequel indique si le courant absorbé par un des deux enroulements (W1, W2) ou par les deux enroulements (W1, W2) du moteur pas à pas (1) est inférieur à la valeur limite réglable ou si le courant absorbé par les deux enroulements (W1, W2) du moteur pas à pas (1) est supérieur à la valeur limite réglable.

5. Dispositif selon l'une des revendications 1 à 3, **caractérisé en ce que** le circuit de réponse (4) compare le courant absorbé par chaque enroulement (W1, W2) du moteur pas à pas (1) avec respectivement une valeur limite réglable attribuée à l'enroulement (W1, W2) et produit deux signaux de réponse (RS), qui indiquent chacun si le courant absorbé par l'enroulement correspondant (W1, W2) du moteur pas à pas (1) est supérieur ou inférieur à la valeur limite réglable attribuée à l'enroulement (W1, W2).

6. Dispositif selon l'une des revendications précédentes, **caractérisé en ce que** le circuit de réponse (4) présente au moins un diviseur de tension (W1, R5 ; W2, R6) pour régler les valeurs limites et au moins un transistor (V5) pour produire le signal de réponse (RS), le courant absorbé par les enroulements (W1, W2) du moteur pas à pas unipolaire (1) étant mesuré par les prises médianes de ces derniers.

7. Dispositif selon l'une des revendications précédentes, **caractérisé en ce que** le régulateur (3) détecte un dysfonctionnement du moteur pas à pas (1), du circuit de pilotage (2) ou des connexions électriques lorsque le régulateur (3) délivre des signaux de commande (SB) d'application de courant à un ou aux deux enroulements (W1, W2) du moteur pas à pas (1) et que le ou les signaux de réponse (RS) indiquent que l'absorption de courant d'un ou des deux enroulements (W1, W2) est inférieure à la valeur limite réglable correspondante.

8. Dispositif selon la revendication 7, **caractérisé en ce que** le régulateur (3) détecte un dysfonctionnement du circuit de réponse (4) lorsque le régulateur (3) ne délivre pas de signaux de commande (SB) d'application de courant au moteur pas à pas (1) et que le ou les signaux de réponse (RS) indiquent que l'absorption de courant du moteur pas à pas (1) est supérieure à la valeur limite réglable correspondante.

9. Procédé pour surveiller un moteur pas à pas piloté au moyen de signaux de pilotage (AS) d'un circuit de pilotage (2), dans lequel les signaux de commande (SB) pour le circuit de pilotage (2) sont produits par un régulateur (3) et dans lequel le courant absorbé par le moteur pas à pas (1) est détecté et évalué via des signaux de réponse (RS) d'un circuit de réponse (4) par le régulateur (3), **caractérisé en ce que** le régulateur (3) compare le signal de réponse (RS) avec les signaux de commande (SB), permettant ainsi de détecter des dysfonctionnements du moteur pas à pas (1), du circuit de pilotage (2), du circuit de réponse (4) et des connexions électriques.

10. Procédé selon la revendication 9, **caractérisé en ce que** le courant absorbé par les deux enroulements (W1, W2) d'un moteur pas à pas unipolaire (1) est comparé avec une valeur limite réglable et qu'un signal de réponse (RS) correspondant est produit, lequel indique si le courant absorbé par un des deux enroulements (W1, W2) ou par les deux enroulements (W1, W2) du moteur pas à pas (1) est inférieur à la valeur limite réglable ou si le courant absorbé par les deux enroulements (W1, W2) du moteur pas à pas (1) est supérieur à la valeur limite réglable.

11. Procédé selon la revendication 9, **caractérisé en ce que** le courant absorbé par chaque enroulement (W1, W2) d'un moteur pas à pas unipolaire (1) est comparé avec respectivement une valeur limite réglable attribuée à l'enroulement (W1, W2) et que deux signaux de réponse (RS) sont produits, qui indiquent chacun si le courant absorbé par l'enroulement correspondant (W1, W2) du moteur pas à pas (1) est supérieur ou inférieur à la valeur limite réglable attribuée à l'enroulement (W1, W2).

12. Procédé selon l'une des revendications 9 à 11, **caractérisé en ce qu'**un dysfonctionnement du moteur pas à pas (1), du circuit de pilotage (2) ou des connexions électriques est détecté lorsque les signaux de commande (SB) signalent une application de courant à un ou aux deux enroulements (W1, W2) du moteur pas à pas (1) et que le ou les signaux de réponse (RS) indiquent que l'absorption de courant d'un ou des deux enroulements (W1, W2) est inférieure à la valeur limite réglable correspondante.

13. Procédé selon l'une des revendications 9 à 11, **caractérisé en ce qu'**un dysfonctionnement du circuit de réponse (4) est détecté lorsque les signaux de commande (SB) ne signalent pas d'application de courant au moteur pas à pas (1) et que le ou les signaux de réponse (RS) indiquent que l'absorption de courant du moteur pas à pas (1) est supérieure à la valeur limite réglable correspondante.
